# EUROPEAN PATENT SPECIFICATION

(11) **EP 1 973 061 B1**
(45) Date of publication and mention of the grant of the patent: **08.08.2012**
(21) Application number: 08152669.1
(22) Date of filing: 13.03.2008
(51) Int. Cl.: G06K 9/03, G06K 9/20

(54) **Character recognition system, character recognition method and automated mail sorting system**
Zeichenerkennungssystem, Zeichenerkennungsverfahren und automatisches Mailsortiersystem
Système de reconnaissance des caractères, procédé de reconnaissance des caractères et système automatisé de tri de courrier

(30) Priority: 15.03.2007 JP 2007065998
(43) Date of publication of application: 24.09.2008
(73) Proprietor: NEC Corporation, Minato-ku Tokyo 108-8001 (JP)
(72) Inventor: Adachi, Tadashi, Tokyo 108-8001 (JP)
(74) Representative: Vossius & Partner

(56) References cited:
- US-A- 3 271 738
- US-A- 5 933 531
- US-A- 6 055 327
- US-A- 6 125 196
- US-A1- 2002 067 859
- US-A1- 2005 031 164

## Description

This application is based upon and claims the benefit of priority from Japanese Patent Application No. 2007-065998, filed on March 15, 2007.

The present invention relates to a character recognition system, a character recognition method and an automated mail sorting system, and more particularly, the invention relates to a character recognition system, a character recognition method and an automated mail sorting system that store unrecognized images as a result of unsuccessful character recognition.

As one application of a character recognition system, an automated mail sorting system which automatically sorts mails is widely known. The automated mail sorting system includes a mail sorting machine having an image scanner and an optical character recognition (OCR) equipment that reads postal addresses of the mails in the images scanned by the image scanner. When the OCR equipment succeeds in recognizing characters of the postal addresses, the mails are sorted according to recognition results of the OCR equipment.

On the other hand, when the OCR equipment fails in recognizing the characters, the images are distributed to a plurality of input terminals. Then, a terminal operator inputs original correct postal address by an input key board. The mails are sorted according to the input results.

Generally, it is necessary to collect samples of misread images in order to search causes of misreading occurred in the OCR equipment. One of methods for collecting OCR misread images is described below. First, the images read by the OCR equipment are collected automatically in a hard disk of a personal computer (PC) together with the recognition results. Then, the collected images and the recognition results are displayed in parallel on the PC using a display program. The misread images are found through visual check. For example, such method is disclosed in JP-A-1998-063773, JP-A-2000-011095 and JP-A-2005-266925.

US 6,055,327 describes a method and system for verifying the correctness of data entered from document images, wherein images are sorted according to their entered values and are then presented to an adjudication operator who verifies that the values shown in the images are correctly ordered. US 5,933,531 describes an optical character recognition method and system employing context analysis and operator input, alternatively and in combination, on the same batch of documents.

An exemplary object of the present invention is to provide a character recognition system, a character recognition method and an automated mail sorting system that can efficiently collect misread images as a result of unsuccessful character recognition.

A character recognition system according to an exemplary aspect of the invention includes: a means for recognizing a character in an image; a means for sampling a plurality of the images which satisfy a predetermined condition; a means for inputting a character read from the sampled image by an operator; a means for judging whether or not the means for recognizing has misread the character, based on a result of comparison between the recognized character and the read character; and a means for storing the sampled image in case that the means for recognizing has misread the character.

An automated mail sorting system according to another exemplary aspect of the invention includes: a means for scanning a mail; a means for recognizing a character in the scanned image; a means for sorting the mail according to information about a destination read from the recognized character; a means for sampling a plurality of the images which satisfy a predetermined condition; a means for inputting a character read from the sampled image by an operator; a means for judging whether or not the means for recognizing has misread the character, based on a result of comparison between the recognized character and the read character; and a means for storing the sampled image in case that the means for recognizing has misread the character.

A character recognition method according to another exemplary aspect of the invention includes: recognizing a character in an image; sampling a plurality of the images which satisfy a predetermined condition; inputting a character read from the sampled image by an operator; comparing the recognized character and the read character; judging whether or not a misreading has occurred in the recognizing the character, based on a result of the comparing; storing the sampled image in case that the misreading has occurred.

Exemplary features and advantages of the present invention will become apparent from the following detailed description when taken with the accompanying drawings in which:
**Fig. 1** is a block diagram showing a configuration of an automated mail sorting system of the first exemplary embodiment of the present invention;
**Fig. 2** is a flowchart showing an operation of the automated mail sorting system of the first exemplary embodiment of the present invention;
**Fig. 3** is a flowchart showing image sampling processing of the automated mail sorting system of the first exemplary embodiment of the present invention;
**Fig. 4** is a flowchart showing an operation of an automated mail sorting system of the second exemplary embodiment of the present invention;
**Fig. 5** is a flowchart showing input terminal management processing of the automated mail sorting system of the second exemplary embodiment of the present invention;
**Fig. 6** is a flowchart showing an example of a procedure in an automated mail sorting system; and
**Fig. 7** is a block diagram showing a configuration of a character recognition system of the third exemplary embodiment of the present invention.

Exemplary embodiments of the present invention will now be described in detail in accordance with the accompanying drawings.

### 1. First Exemplary Embodiment

First, terminology used in present exemplary embodiments is defined. In the present exemplary embodiments, "read" means discriminating characters such as postal addresses and the like written on mails and understanding meanings of the characters. That is, the meaning of "reading" includes the one of recognizing what characters are written. Therefore, "reading" includes character recognition or recognizing characters.

Next, in the present exemplary embodiments, "misreading" means a failure in recognizing the characters written on the mails. That is, it means that the characters are not recognized, or the characters are incorrectly recognized as different characters that are not written. Therefore, the meaning of "misreading" includes the same meaning as "misrecognition," or "failure", "error", "mistake" and the like, in recognizing characters.

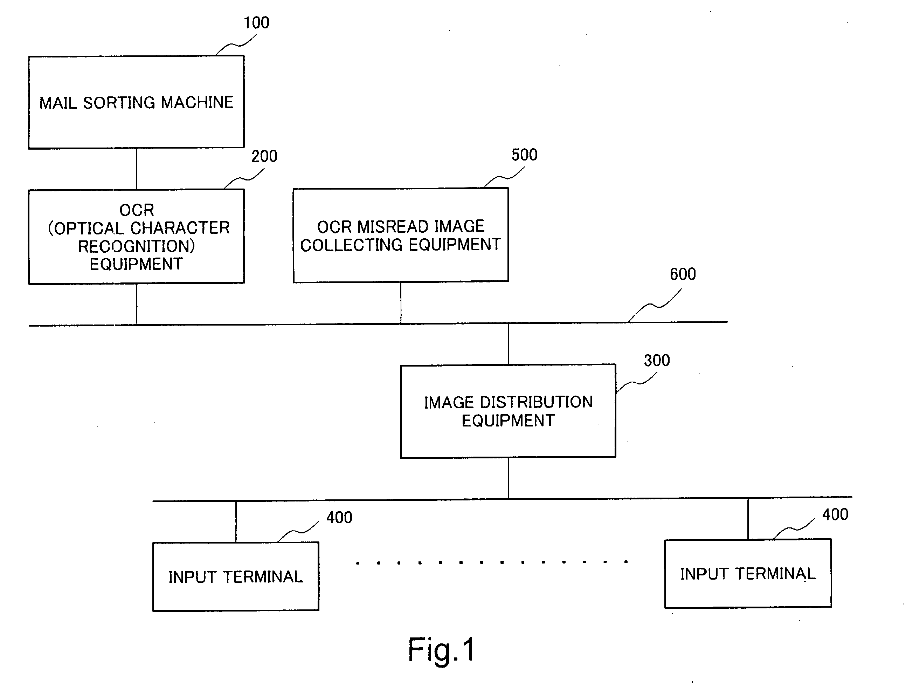

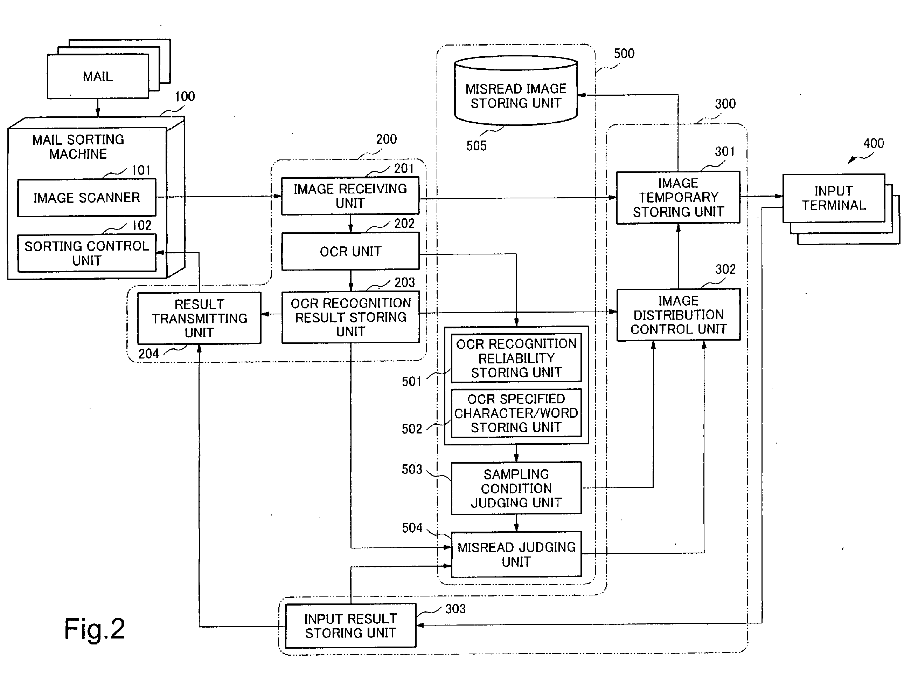

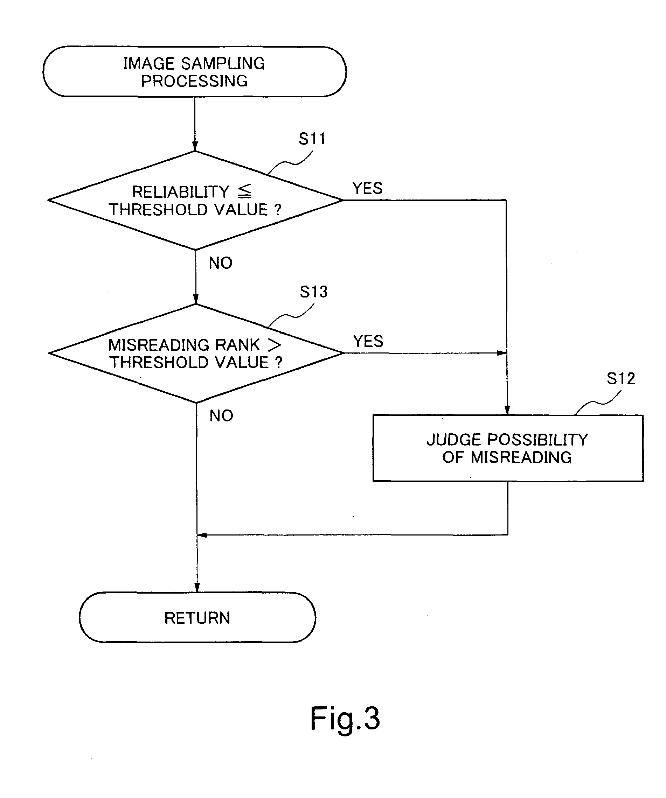

The first exemplary embodiment of the present invention will be described with reference to drawings. **Fig. 1** is a block diagram showing a configuration of an automated mail sorting system of the first exemplary embodiment of the present invention. **Fig. 2** is a flowchart showing an operation of an automated mail sorting system of the present exemplary embodiment. **Fig. 3** is a flowchart showing image sampling processing of an automated mail sorting system of the present exemplary embodiment.

As shown in **Figs. 1** and **2**, the automated mail sorting system of the present exemplary embodiment includes a mail sorting machine 100, an OCR equipment 200, an image distribution equipment 300, a plurality of input terminals 400 and an OCR misread image collecting equipment 500. The automated mail sorting system may include a network 600 such as a LAN so that the machines and apparatuses stated above can freely communicate each other.

The mail sorting machine 100 sorts mails into sorting boxes (not shown) according to postal addresses, and specifically, includes an image scanner 101 and a sorting control unit 102. The image scanner 101 optically scans a surface of the mails and generates an image of a face of the mail on which the postal address is described. A sorting control unit 102 sorts the mails according to either the results of recognition by the OCR equipment 200 or the input information supplied from the input terminal 400.

The OCR equipment 200 has a character recognition function of recognizing characters in the images generated by the image scanner 101, and specifically, includes an image receiving unit 201, an OCR unit 202, an OCR recognition result storing unit 203 and a result transmitting unit 204. The image receiving unit 201 receives image data from the image scanner 101. The OCR unit 202 recognizes characters in the image data and outputs the recognized character codes and recognition reliability.

The "recognition reliability" in the OCR unit 202 is obtained as follows. For example, suppose that the OCR unit 202 judges the number of the characters in the address as X and the number of the characters successfully recognized as Y. Then, the number of the characters that is not recognized is X-Y. When a character string of the address including unrecognized characters is compared with an address database, one unique address may be identified and thereby the address may be successfully recognized. In such a case, some out of the total number of characters are estimated to be obtained. Then, as a degree of certainty of the recognized characters, a ratio Z of the number of the characters successfully recognized to the total number of the characters (i.e. Z=Y/X) is defined as the "recognition reliability."

The OCR recognition result storing unit 203 stores the results of recognition by the OCR unit 202. The result transmitting unit 204 transmits either the recognition results of the OCR equipment 200 or the input results from the input terminal 400, to the sorting control unit 102.

The image distribution equipment 300 distributes images to a plurality of input terminals 400, and specifically, includes an image temporary storing unit 301, an image distribution control unit 302 and an input result storing unit 303. The image temporary storing unit 301 temporarily stores images supplied from the image scanner 101. The image distribution control unit 302 distributes images stored in the image temporary storing unit 301 to a plurality of input terminals 400. The input result storing unit 303 stores input results from the input terminals 400.

The input terminal 400 includes a display for displaying the images and a keyboard for inputting the characters of the postal addresses. An input operator is positioning at each input terminal 400, and inputs correct postal addresses by reading the image on the display.

As shown in **Fig. 1****,** a plurality of input terminals 400 are provided to share inputting work. The number of the input terminals 400 can be properly adjusted according to an amount of the inputting work and the number of operators. In some cases, only one input terminal 400 may be provided.

The OCR misread image collecting equipment 500 collects and stores misread images of the OCR equipment 200. Specifically, the OCR misread image collecting equipment 500 includes an OCR recognition reliability storing unit 501, an OCR specified character/word storing unit 502, a sampling condition judging unit 503, a misread judging unit 504 and a misread image storing unit 505.

The OCR recognition reliability storing unit 501 stores a value of the recognition reliability output from the OCR equipment 200. The value of recognition reliability is the recognition reliability that the OCR unit 202 outputs.

When "specified characters/words" are included in the recognition results of the OCR equipment 200, the OCR specified character/word storing unit 502 stores the specified characters/words included in the recognition results. "Specified character/word" is a character or a word that is liable to be misread. For example, the specified characters/words include the Arabic numeral 1 and the alphabet I, the Arabic numeral 8 and the alphabet B, PObox and P0604, and the like.

The specified characters/words are set in the OCR unit 202 in advance. The specified characters/words may be ranked in advance according to likelihood of misreading. The rank is described as "misreading rank", hereinafter. The misreading rank is set to each specified character/word. Stored contents in the OCR specified character/word storing unit 502 may not be the specified characters/words, but may be the misreading ranks of the specified characters/words.

The sampling condition judging unit 503 samples, under predetermined conditions, images to which character recognition is performed by the OCR equipment 200. A purpose of the sampling by the sampling condition judging unit 503 is to store only the images that are likely to be misread in the misread storing unit 505. For example, criteria for the sampling using the OCR recognition reliability include the following. The maximum value of the recognition reliability is 1. Then, if the recognition reliability is lower than 0.7, the recognition is regarded as unsuccessful and the image is not sampled. This is because, when the recognition rate is too low, it is probable that the image itself may include trouble, and that image is not suitable as data for searching causes of misreading. Images with recognition reliability greater than or equal to 0.7 are sampled on the grounds that the images in which character recognition is successfully performed. In this case, images with the recognition reliability which ranges from 0.7 to 0.8 may be sampled and images with the recognition reliability greater than or equal to 0.8 may not be sampled. This is because, if the recognition rate is sufficiently high, the images are sufficiently reliable and may not be suitable as data for searching causes of misreading due to a small number of misread characters.

The sampling condition judging unit 503 also performs sampling based on the judgment whether or not the specified characters/words are included in the recognized characters. It is judged based on contents stored in the OCR specified character/word storing unit 502 whether or not the specified characters/words are included. Further, the sampling condition judging unit 503 may perform sampling based on the misreading rank of the specified characters/words included in the recognized characters.

"Sampling" of an image means drawing such an image that satisfies predetermined conditions from a plurality of images. Random sampling may be performed before or after the sampling under the predetermined conditions. It is also effective to use random sampling together, when a number of the images satisfy the predetermined conditions.

The misread judging unit 504 compares the recognition results of the OCR equipment 200 with the input results from the input terminal 400, and judges whether or not misreading is present in the recognition result of the OCR equipment 200. The misread image storing unit 505 stores the recognition results of misreading and the input results together with the images that are judged as misread.

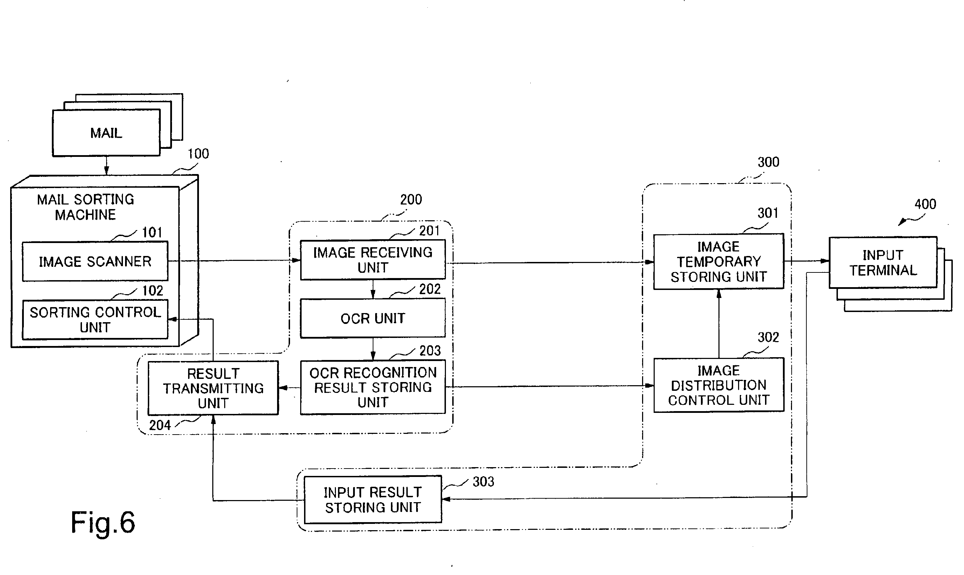

Next, operations of the automated mail sorting system according to the first exemplary embodiment will be described with reference to **Figs. 2****,** **3** and **6****.** First, **Fig. 6** shows an example of a procedure in an automated mail sorting system. In **Fig. 6**, when mails are supplied to the mail sorting machine 100, the image scanner 101 obtains images of an address side of the mails. The produced images are received by the image receiving unit 201, and are stored in the image temporary storing unit 301. At the same time, the images are sent to the OCR unit 202 that attempts to recognize the characters of the addresses. The recognition results are stored in the OCR recognition result storing unit 203.

If the character recognition of the addresses is successfully performed, the result transmitting unit 204 obtains the recognition results from the OCR recognition result storing unit 203 and transmits the OCR recognition result to the sorting control unit 102. The sorting control unit 102 sorts the mails according to the results received.

If the character recognition of the addresses is unsuccessful, the OCR recognition result storing unit 203 notifies the image distribution control unit 302 of failure of the OCR recognition. The image distribution control unit 302 distributes the images stored in the image temporary storing unit 301 to the input terminals 400. When a read result which the operator of the input terminal 400 has read from the images are input to the input terminals 400, the input results are stored in the input result storing unit 303. The result transmitting unit 204 receives the input results from the input result storing unit 303 and transmits the input result to the sorting control unit 102. The sorting control unit 102 sorts the mails according to the input results.

Next, a procedure of the exemplary embodiment of the present invention will be described using **Fig. 2**. In the normal procedure, as mentioned above, the OCR unit 202 stores the recognition results in the OCR recognition result storing unit 203. At the same time, the OCR unit 202 stores the reliability information and the recognition results of specified characters/words, both of which are obtained during the recognition process of the OCR unit 202, in the OCR reliability storing unit 501 and in the OCR specified character/word storing unit 502, respectively. The sampling condition judging unit 503 judges whether or not the information exceeds a threshold value. The sampling condition judging unit 503 performs two kinds of judgment. One judgment is whether or not misreading by the OCR equipment 200 is likely, that is, a judgment on the recognition reliability of the OCR equipment 200. The other judgment is whether or not the image may cause misreading due to similarity to the specified characters/words, that is, a judgment on whether or not the image includes the specified characters/words.

Specifically, as shown in **Fig. 3**, the sampling condition judging unit 503 compares the recognition reliability with the recognition reliability threshold value (S11). The recognition reliability and the recognition reliability threshold value are stored in the OCR reliability storing unit 501 and the sampling condition judging unit 503, respectively. When the recognition reliability is lower than or equal to the recognition reliability threshold value, the sampling condition judging unit 503 judges that misreading is likely to have occurred (S12).

"Recognition reliability threshold value" is a value for judging probability of misreading occurrence. The recognition reliability threshold value is set in the sampling condition judging unit 503 in advance. The recognition reliability threshold value can be optionally changed.

Further, when a specified character/word is stored in the OCR specified character/word storing unit 502, the sampling condition judging unit 503 compares a value of the misreading rank of the specified character/word with a misreading rank threshold value (S13). And, when the value of the misreading rank exceeds the misreading rank threshold value, the sampling condition judging unit 503 judges that misreading is likely to have occurred (S12).

It is judged that misreading has occurred, if a specified character/word with the rank equal to or larger than the "misreading rank threshold value" is included. The misreading rank threshold value is set to the sampling condition judging unit 503 in advance. The misreading rank threshold value can be optionally changed.

When the sampling condition judging unit 503 judges that misreading is likely to have occurred, the sampling condition judging unit 503 instructs the image distribution control unit 302 to distribute relevant images to the input terminals 400. According to the instruction, the image distribution control unit 302 distributes the relevant images from the image temporary storing unit 301 to the input terminals 400, even though the OCR equipment 200 already read the addresses. Then, the recognition results have already been transmitted by the result transmitting unit 204 from the recognition result storing unit 203 to the sorting control unit 102, and sorting of the relevant mails have been completed using the recognition results. Accordingly, the result transmitting unit 204 does not use the input results obtained from the input result storing unit 303.

Further, the relevant images are distributed to the input terminals 400, not only when the sampling condition judging unit 503 judges that misreading is likely to have occurred, but also when the character recognition is unsuccessful, as described above. That is, the OCR recognition result storing unit 203 notifies the image distribution control unit 302 of unsuccessful OCR recognition. The image distribution control unit 302 distributes the images stored in the image temporary storing unit 301 to the input terminals 400. However, in case of unsuccessful OCR recognition, the relevant images in themselves include problems, and the images are not stored but are discarded, because the images may be not suitable as data for searching causes of the image misreading.

The misread judging unit 504 compares the recognition results of the OCR recognition result storing unit 203 and those of the input result storing unit 303, and judges whether or not the two recognition results agree. If the recognition results agree, the OCR equipment has not misread. Thus, the processing on the recognition results is completed. On the other hand, if the recognition results do not agree, the misread judging unit 504 supplies the image distribution control unit 302 with misread result information, i.e. the character recognition results and the input results by the OCR equipment 200, and instructs the image distribution control unit 302 to store the relevant images. The image distribution control unit 302 retrieves out the relevant images from the image temporary storing unit 301 and stores the relevant images in the misread image storing unit 505 together with the misread result information. By repeating the series of processing, the OCR misread images are collected and stored in the misread image storing unit 505 together with the misread result information.

The above operation of the automated mail sorting system of the exemplary embodiment can be easily controlled with a CPU and memories (not shown in **Figs. 1** and **2**). That is, the CPU executes a program for controlling the operation.

In the automated mail sorting system of the exemplary embodiment as configured above, the images for which character recognition is performed by the OCR equipment 200 are sampled under predetermined conditions. Then, the sampled images are distributed to the input terminals 400, and the recognition results of the OCR equipment 200 and the input results from the input terminals 400 are compared. As a result of the comparison, if it is judged that the OCR equipment 200 misreads, misread images are stored. Therefore, special examiners are not required, and the misread images of the OCR equipment 200 can be collected automatically during normal mail sorting processing having support of the input terminals 400.

Moreover, since many operators usually perform the inputting work of the mail sorting processing, the work load does not concentrate on a single inputting operator. Accordingly, even if the collection of misread images continues over a considerably long period, the work load does not result in a burden to the inputting operators. Only the images that are highly probable to be misread by the OCR equipment 200 are sampled. The operator of the input terminals 400 are required to read only the sampled images and input the read results from the images to the input terminals 400. Therefore, compared with the random sampling of images, it is possible to collect the misread images and decrease the burden to the inputting operators effectively.

### 2. Second Exemplary Embodiment

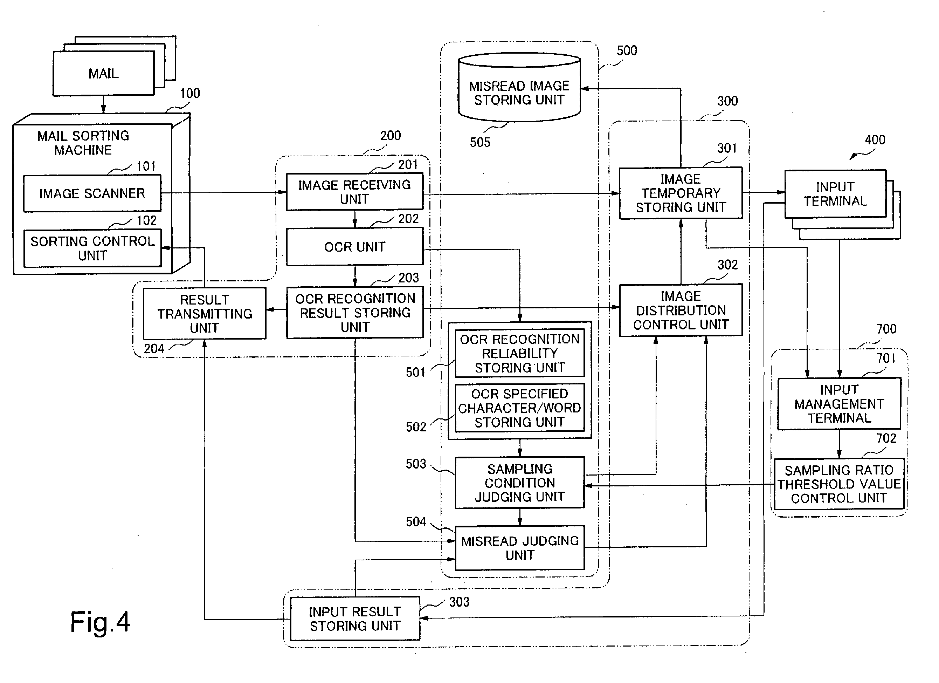

The automated mail sorting system according to the second exemplary embodiment of the present invention will be explained with reference to **Figs. 4****,** **5** and **6**. Each component of the second exemplary embodiment common to the first exemplary embodiment has common numbers.

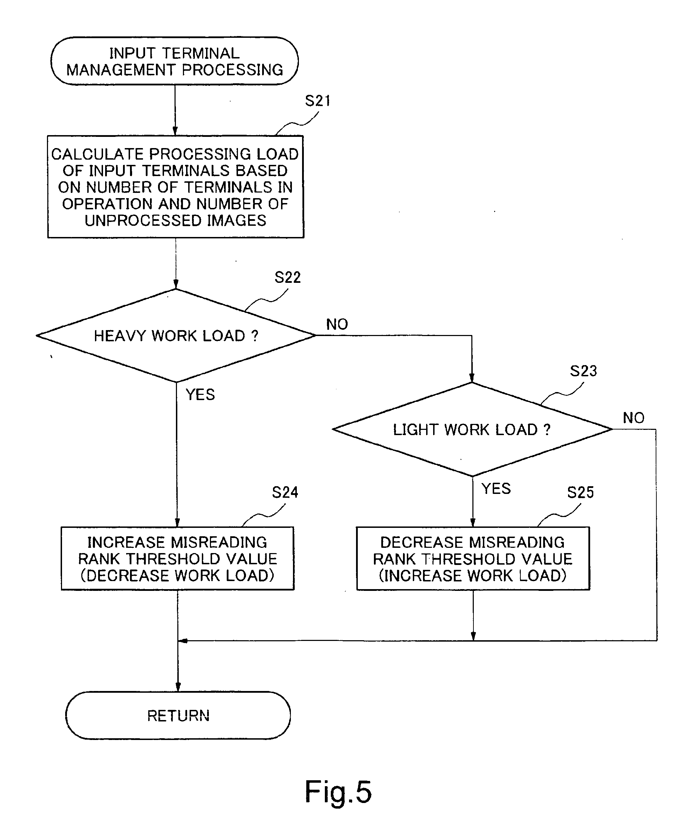

**Fig. 4** is a flow chart showing operations of the automated mail sorting system according to the second exemplary embodiment. **Fig. 5** is a flow chart showing input terminal management processing of the automated mail sorting system according to the second exemplary embodiment. As shown in these figures, the mail sorting system according to the second exemplary embodiment further includes an input terminal management equipment 700 having an input management terminal 701 and a sampling ratio threshold value control unit 702.

The input terminal management equipment 700 automatically collects information such as the number of operating input terminals 400, the number of unprocessed input images, and the like, and indicates the information to users. The automated mail sorting system generally includes the input management terminal 701. The input management terminal 701 indicates how many terminals among the plurality of terminals 400 are operating at present, and how many inputting operators are working. Further, the input management terminal 701 calculates and indicates a total input throughput of all the input terminals. Further, the terminal 701 indicates how many images are waiting for input after distribution, i.e. the number of the so called remaining non-input images. Since the OCR misread image collection requires the inputting operators to visually read the images read by the OCR equipment 200 and to input the results, the inputting operators bear a large burden. However, in the system shown in **Fig. 4**, depending on the number of the inputting operators and the number of the remaining non-input images, adjustment of the number of the input images for checking the OCR misreading is automatically achieved. Therefore, the load to the inputting operators is leveled.

Specifically, the input management terminal 701 keeps data on the number of the input terminals 400 in operation and the number of the unprocessed images (S21) . The input management terminal 701 judges whether or not processing work load of the inputting operators is heavy (S22). That is, the input management terminal 701 judges whether or not the number of the unprocessed images is very large, or whether or not the number of the input terminals 400 in operation is small. When judging that the processing work load is not heavy at the step S22, the input management terminal 701 judges whether or not the processing work load is light (S23). Then, the input management terminal 701 transmits the results of the judgment at the steps S22 and S23 to the sampling ratio control unit 702.

When the processing work load is judged heavy at the step S22, the sampling ratio control unit 702 increases the misreading rank threshold value to make the sampling condition strict and sets a new threshold value to the sampling condition judging unit 503 in order to change an interval of the sampling. In this case, the number of the sampled image decreases. When the processing work load is judged light at the step S23, the sampling ratio control unit 702 decreases the misreading rank threshold value to make the sampling condition easy and sets a new threshold value to the sampling condition judging unit 503. In this case, the number of the sampled image increases.

Thus, the above control process of the second exemplary embodiment decreases or increases the number of the sampled image. Therefore, the number of the instructions on image distribution from the sampling condition judging unit 503 to the image distribution control unit 302 for the purpose of searching causes of the OCR misreading decreases or increases. As a result, the work load of the inputting operators is leveled.

According to the results of judgment on the processing work load, a range of the recognition reliability, rather than the misreading rank threshold value, may be changed. That is, when the processing work load is heavy, the range of the recognition reliability of the images to be sampled at the sampling condition judging unit 503 is narrowed. When the processing work load is light, the range of the recognition reliability of the images to be sampled is widened.

In above, the automated mail sorting system according to the present invention has been explained with a preferred exemplary embodiment. However, it is not limited to only the exemplary embodiment described above, and, needless to say, various alternative embodiments of the automated mail sorting system are possible.

The automated mail sorting system according to the present invention is suitable for an automated mail sorting system that includes a mail sorting machine having an image scanner, OCR equipment that reads postal addresses of mails from images scanned by the image scanner, and a plurality of input terminals to which images failed in character recognition by the OCR equipment are distributed and by which operators input postal addresses upon receiving the images. Further, the automated mail sorting system may efficiently collect the misread images by the OCR equipment.

### 3. Third Exemplary Embodiment

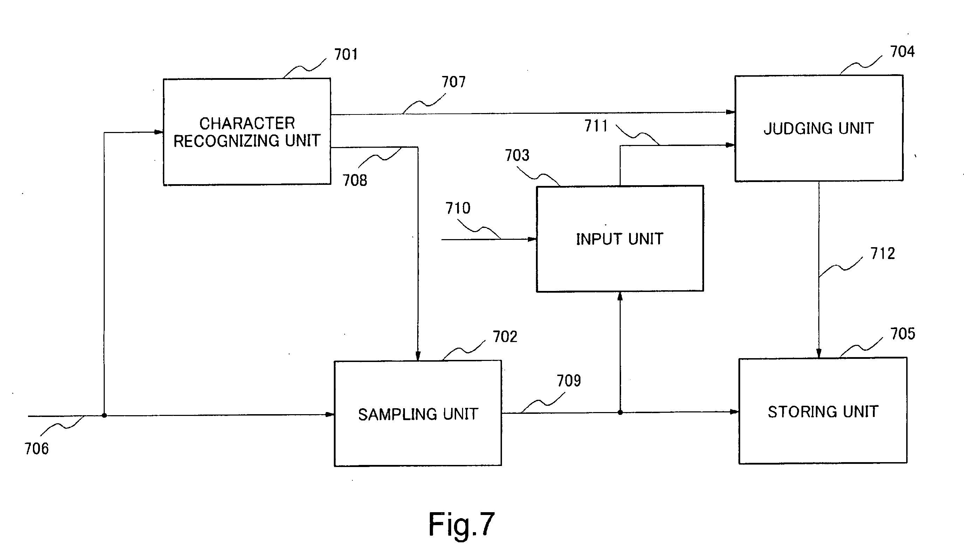

The first exemplary embodiment and the second exemplary embodiment are examples of an automated mail sorting system. The present invention can also be applied not only to those automated mail sorting system but also to a general system having a character recognition function. **Fig. 7** is a block diagram showing a configuration of a character recognition system of the third exemplary embodiment of the present invention.

The present character recognition system includes a character recognizing unit 701, a sampling unit 702, an input unit 703, a judging unit 704 and a storing unit 705. The character recognizing unit 701 corresponds to the OCR equipment 200 of the first and second exemplary embodiments. Similarly, the sampling unit 702 corresponds to the sampling condition judging unit 503, the input unit 703 to the input terminal 400, the judging unit 704 to the misread judging unit 504 and the storing unit 705 to the misread image storing unit 505, respectively.

The character recognizing unit 701 recognizes characters in input images 706, and outputs recognized character information 707 to the judging unit 704 and outputs image information 708 to the sampling unit 702. The image information 708 includes recognition reliability and specific character information. The specific character information is specific character information or a rank thereof included in the input images 706. The recognition reliability, the specific character information and the rank are same as those described in the first exemplary embodiment.

The sampling unit 702 samples images that satisfy predetermined conditions among the images 706, and outputs sampled images 709 to the storing unit 705 and to the input unit 703. Examples of the predetermined conditions are that the recognition reliability included in the image information 708 lies within a given range, the specified character information includes pre-designated characters, and the rank of the specified characters is higher than a predetermined rank, and the like. The sampling by the sampling unit 702 is performed to effectively achieve the processing for storing the misread images by examining in detail only the images that are likely to be misread.

The input unit 703 includes a display function for the sampled images 709 and an input function for inputting character information 710. For example, an input terminal having a display screen and a keyboard corresponds to the input unit 703. An operator of the input terminal watches the sampled images 709 on the display screen, visually discriminates the characters, and inputs the characters. The input unit 703 outputs the input characters to the judging unit 704 as read character information 711.

The judging unit 704 compares the recognized character information 707 with the read character information 711, and outputs a misread indication signal 712 to the storing unit 705 if the information 707 and 711 are different from each other.

The storing unit 705, when the misread indication signal 712 is output, stores the sampled image 709 that corresponds to the signal 712.

Further, the judgment conditions in the sampling unit 702 may be changed according to the number of the terminals in the input unit 703 as in the second exemplary embodiment.

And, the characters to be recognized may be not only the so-called alphabets and numerals but also figures having defined meanings such as marks, symbols, icons, etc.

As stated above, in the character recognition system of the third exemplary embodiment, it is judged whether or not misreading actually occurs in images that are possibly misread, and the relevant images are stored if misreading actually occurs. Accordingly, judgment on whether or not misreading is present and storing work of the misread images may be effectively performed.

In the related art of the collecting method of misread images disclosed in the above-mentioned patent documents mentioned in the background art, it is required to find misread images that are normally less than 1% from the images correctly read. Since that work needs considerable labor, it is difficult to apply the above-mentioned collecting method to such an automated mail sorting system that handles a large amount of mails. When a mail sorting machine is used, the above-mentioned collecting work of misread images corresponds to the work in which examiners visually find each mail incorrectly sorted. Moreover, it is generally required to continue the collecting work of misread images over a considerably long time. Therefore, the labor for the image collection is enormous.

According to the automated mail sorting system of the present invention, images on which character recognition is performed by the OCR equipment are sampled under predetermined conditions. The recognition results of sampled images by operators are compared with the results by the OCR equipment, it is judged whether or not misreading occurs. And, only the images that are judged misread are stored. Therefore, the special examiners are not required, and by support of input terminals the misread images of the OCR equipment can be collected automatically during the normal mail sorting processing.

Moreover, since the inputting work of the mail sorting processing is usually shared by many operators, the work load does not concentrate on a single inputting operator. Accordingly, even if the collection of misread images continues over a considerably long period, the inputting operators don't have a lot of burden. Only images that are highly probable to be misread by the OCR equipment are sampled, the operators of the input terminals 400 are required to input the read result from only the sampled images. Therefore, compared with the random sampling of images, it is possible to collect the misread images and decrease the burden to the inputting operators more effectively.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

## Claims

1. A character recognition system comprising:
a means for recognizing (202) a character in an image;
a means for sampling (503) a plurality of the images which satisfy a predetermined condition;
a means for inputting (400) a character which is read from the sampled image by an operator;
a means for judging (504) whether or not the means for recognizing has misread the character, based on a result of comparison between the recognized character and the input character; and
a means for storing (505) the sampled image in case that the means for recognizing has misread the character,
wherein the means for sampling selects an image from the plurality of the images, based on a reliability (S11) that the means for recognizing has misread the character,
wherein the means for sampling judges whether or not the recognized character includes a specified character,
wherein the specified character is classified into a rank based on the likelihood of misreading the specified characters in a plurality of ranks, and
wherein the means for sampling judges that misreading is likely to have occurred (S12) based on the rank of the specified character.

2. The character recognition system according to claim 1, wherein
the means for recognizing comprises a means for scanning (101) the image.

3. An automated mail sorting system including the character recognition system according to claim 1, said sorting system comprising:
a means for scanning a mail; and
a means for sorting the mail according to information about a destination read from the recognized character,
wherein the means for recognizing recognizes a character in the scanned mail.

4. The system according to claim 1, 2 or 3, wherein
the means for sampling judges the reliability, based on recognition reliability of the image.

5. The system according to claim 4, wherein
the recognition reliability is a ratio of the number of the recognized character to the number of total characters in the image.

6. The system according to claim 4 or 5, wherein
the means for sampling judges the reliability, based on whether or not the recognition reliability is within a predetermined range.

7. The system according to claim 6, further comprising
a plurality of the means for inputting, wherein
the means for sampling changes the predetermined range, based on the number of means for inputting in operation out of the plurality of the means for inputting.

8. The system according to claim 3, further comprising:
a plurality of the means for inputting, wherein
the means for sampling judges the reliability, based on whether or not the rank of the specified character is over a predetermined rank, and
the means for sampling changes the predetermined rank, based on the number of means for inputting in operation out of the plurality of the means for inputting.

9. The system according to any one of claims 1 to 8, wherein the means for storing (505) stores the sampled image including a character misread by the means for recognizing.

10. A character recognition method comprising:
recognizing a character in an image;
sampling a plurality of the images which satisfy a predetermined condition;
inputting a character which is read from the sampled image by an operator;
comparing the recognized character and the input character
judging whether or not a misreading has occurred in the recognizing the character, based on a result of the comparing; and
storing the sampled image in case that the misreading has occurred,
wherein an image is selected from the plurality of the images based on a reliability that the character is misread,
wherein the reliability is judged based on whether or not the recognized character includes a specified character,
wherein the specified character is classified into a rank based on the likelihood of misreading the specified characters in a plurality of ranks, and
wherein the sampling judges that misreading is likely to have occurred based on the rank of the specified character.

11. A control program product used for a character recognition system comprising one or more computer readable media having computer executable instructions for performing the following method steps of:
recognizing a character in an image;
sampling a plurality of the images which satisfy a predetermined condition;
inputting a character which is read from the sampled image by an operator;
comparing the recognized character and the input character;
judging whether or not a misreading has occurred in the recognizing the character, based on a result of the comparing; and
storing the sampled image in case that the misreading has occurred,
wherein an image is selected from the plurality of the images based on a reliability that the character is misread,
wherein the reliability is judged based on whether or not the recognized character includes a specified character,
wherein the specified character is classified into a rank based on the likelihood of misreading the specified characters in a plurality of ranks, and
wherein the sampling judges that misreading is likely to have occurred based on the rank of the specified character.

## Patentansprüche

1. Zeichenerkennungssystem mit:
einer Einrichtung (202) zum Erkennen von Zeichen in einem Bild;
einer Einrichtung (503) zum Scannen mehrerer Bilder, die eine vorgegebene Bedingung erfüllen;
einer Einrichtung (400) zum Eingeben von Zeichen, die vom gescannten Bild gelesen werden, durch eine Bedienungsperson;
einer Einrichtung (504) zum Entscheiden, ob die Erkennungseinrichtung die Zeichen falsch erkannt hat, basierend auf dem Ergebnis eines Vergleichs zwischen den erkannten Zeichen und den eingegebenen Zeichen; und
einer Einrichtung (505) zum Speichern des gescannten Bildes in dem Fall, dass die Erkennungseinrichtung die Zeichen falsch erkannt hat,
wobei die Scaneinrichtung ein Bild basierend auf einer Zuverlässigkeit, dass die Erkennungseinrichtung die Zeichen falsch erkannt hat, von den mehreren Bildern auswählt (S11),
die Scaneinrichtung entscheidet, ob die erkannten Zeichen ein spezifiziertes Zeichen enthalten,
das spezifizierte Zeichen basierend auf einer Wahrscheinlichkeit, dass das spezifizierte Zeichen falsch erkannt wird, in eine Rangstufe von mehreren Rangstufen eingeordnet wird, und
die Scaneinrichtung basierend auf der Rangstufe des spezifizierten Zeichens entscheidet, dass wahrscheinlich eine falsche Erkennung aufgetreten ist (S12).

2. Zeichenerkennungssystem nach Anspruch 1, wobei die Erkennungseinrichtung eine Einrichtung (101) zum Scannen des Bildes aufweist.

3. Automatisches Postsortiersystem mit einem Zeichenerkennungssystem nach Anspruch 1, wobei das Sortiersystem aufweist:
eine Einrichtung zum Scannen von Postsendungen; und
eine Einrichtung zum Sortieren der Postsendungen gemäß Information über eine Zieladresse, die von den erkannten Zeichen erfasst wird,
wobei die Erkennungseinrichtung Zeichen der gescannten Postsendung erkennt.

4. System nach Anspruch 1, 2 oder 3, wobei
die Scaneinrichtung die Zuverlässigkeit basierend auf der Erkennungszuverlässigkeit des Bildes bestimmt.

5. System nach Anspruch 4, wobei
die Erkennungszuverlässigkeit ein Verhältnis zwischen der Anzahl erkannter Zeichen und der Gesamtanzahl von Zeichen im Bild ist.

6. System nach Anspruch 4 oder 5, wobei
die Scaneinrichtung die Zuverlässigkeit basierend darauf bestimmt, ob die Erkennungszuverlässigkeit innerhalb eines vorgegebenen Bereichs liegt oder nicht.

7. System nach Anspruch 6, ferner mit:
mehreren Eingabeeinrichtungen, wobei
die Scaneinrichtung den vorgegebenen Bereich basierend auf der Anzahl der in Betrieb befindlichen Eingabeeinrichtungen unter den mehreren Eingabeeinrichtungen ändert.

8. System nach Anspruch 3, ferner mit:
mehreren Eingabeeinrichtungen, wobei
die Scaneinrichtung die Zuverlässigkeit basierend darauf bestimmt, ob die Rangstufe des spezifizierten Zeichens höher ist als eine vorgegebene Rangstufe oder nicht, und
die Scaneinrichtung die vorgegebene Rangstufe basierend auf der Anzahl der in Betrieb befindlichen Eingabeeinrichtungen unter den mehreren Eingabeeinrichtungen ändert.

9. System nach einem der Ansprüche 1 bis 8, wobei die Speichereinrichtung (505) das gescannte Bild speichert, das durch die Erkennungseinrichtung falsch erkannte Zeichen enthält.

10. Zeichenerkennungsverfahren mit den Schritten:
Erkennen von Zeichen in einem Bild;
Scannen mehrerer Bilder, die eine vorgegebene Bedingung erfüllen;
Eingeben von Zeichen, die vom gescannten Bild gelesen werden, durch eine Bedienungsperson;
Vergleichen der erkannten Zeichen mit den eingegebenen Zeichen;
Entscheiden, ob bei der Erkennung der Zeichen eine falsche Erkennung aufgetreten ist oder nicht, basierend auf dem Vergleichsergebnis; und
Speichern des gescannten Bildes, falls eine falsche Erkennung aufgetreten ist,
wobei ein Bild basierend auf einer Zuverlässigkeit, dass die Zeichen falsch erkannt wurden, aus den mehreren Bildern ausgewählt wird,
wobei die Zuverlässigkeit basierend darauf bestimmt wird, ob die erkannten Zeichen ein spezifiziertes Zeichen enthalten oder nicht,
wobei das spezifizierte Zeichen basierend auf der Wahrscheinlichkeit einer falschen Erkennung des spezifizierten Zeichens in eine Rangstufe von mehreren Rangstufen eingeordnet wird, und
wobei im Scanschritt basierend auf der Rangstufe des spezifizierten Zeichens entschieden wird, dass wahrscheinlich eine falsche Erkennung aufgetreten ist.

11. Steuerprogrammprodukt, das für ein Zeichenerkennungssystem verwendet wird, mit einem oder mehreren computerlesbaren Speichermedien mit auf einem Computer ausführbaren Anweisungen zum Ausführen der folgenden Verfahrensschritte:
Erkennen von Zeichen in einem Bild;
Scannen mehrerer Bilder, die eine vorgegebene Bedingung erfüllen;
Eingeben von vom gescannten Bild gelesenen Zeichen durch eine Bedienungsperson;
Vergleichen der erkannten Zeichen mit den eingegebenen Zeichen;
Entscheiden, ob bei der Erkennung der Zeichen eine falsche Erkennung aufgetreten ist, basierend auf einem Ergebnis des Vergleichs; und
Speichern des gescannten Bildes, falls eine falsche Erkennung aufgetreten ist,
wobei basierend auf einer Zuverlässigkeit, dass die Zeichen falsch erkannt wurden, ein Bild aus den mehreren Bildern ausgewählt wird,
wobei die Zuverlässigkeit basierend darauf bestimmt wird, ob die erkannten Zeichen ein spezifiziertes Zeichen enthalten oder nicht,
wobei das spezifizierte Zeichen basierend auf der Wahrscheinlichkeit einer falschen Erkennung der spezifizierten Zeichen in eine Rangstufe von mehreren Rangstufen eingeordnet wird, und
wobei im Scanschritt basierend auf der Rangstufe des spezifizierten Zeichens entschieden wird, dass wahrscheinlich eine falsche Erkennung aufgetreten ist.

## Revendications

1. Système de reconnaissance de caractère, comportant :
un moyen de reconnaissance (202) de caractère dans une image ;
un moyen d'échantillonnage (503) d'une pluralité d'images qui satisfont à une condition définie ;
un moyen de saisie (400) d'un caractère lu à partir de l'image échantillonnée par un opérateur ;
un moyen d'évaluation (504) si le moyen de reconnaissance a ou n'a pas correctement lu le caractère, sur la base d'un résultat de comparaison du caractère reconnu avec le caractère saisi ; et
un moyen d'archivage (505) de l'image échantillonnée si le moyen de reconnaissance a mal lu le caractère,
où le moyen d'échantillonnage sélectionne une image parmi une pluralité d'images, sur la base d'une fiabilité (S11) de lecture incorrecte du caractère par le moyen de reconnaissance,
où le moyen d'échantillonnage évalue si le caractère reconnu comprend un caractère spécifié ou pas,
où le caractère spécifié est classé dans un rang sur la base de la probabilité d'erreur de lecture des caractères spécifiés dans une pluralité de rangs, et
où le moyen d'échantillonnage évalue que l'erreur de lecture s'est probablement produite (S12) sur la base du rang du caractère spécifié.

2. Système de reconnaissance de caractère selon la revendication 1, où
le moyen de reconnaissance comporte un moyen de balayage (101) de l'image.

3. Système de tri automatique du courrier comprenant le système de reconnaissance de caractère selon la revendication 1, ledit système de tri comportant :
un moyen de balayage d'un courrier ; et
un moyen de tri du courrier en fonction de l'information sur une destination lue à partir du caractère reconnu,
où le moyen de reconnaissance reconnaît un caractère dans le courrier balayé.

4. Système selon la revendication 1, 2 ou 3, où le moyen d'échantillonnage évalue la fiabilité sur la base de la fiabilité de reconnaissance de l'image.

5. Système selon la revendication 4, où
la fiabilité de reconnaissance est un rapport entre le nombre de caractères reconnus et le nombre total de caractères dans l'image.

6. Système selon la revendication 4 ou 5, où
le moyen d'échantillonnage évalue la fiabilité en fonction de l'inclusion ou de la non-inclusion de la fiabilité de reconnaissance dans une plage définie.

7. Système selon la revendication 6, comportant en outre :
une pluralité de moyens de saisie, où
le moyen d'échantillonnage modifie la plage définie, sur la base du nombre de moyens de saisie en fonctionnement parmi la pluralité de moyens de saisie.

8. Système selon la revendication 3, comportant en outre :
une pluralité de moyens de saisie, où
le moyen d'échantillonnage évalue la fiabilité en fonction du dépassement ou du non-dépassement d'un rang défini par le rang du caractère spécifié, et
où le moyen d'échantillonnage modifie le rang défini sur la base du nombre de moyens de saisie en fonctionnement parmi la pluralité de moyens de saisie.

9. Système selon l'une des revendications 1 à 8, où le moyen d'archivage (505) mémorise l'image échantillonnée en incluant un caractère mal lu par le moyen de reconnaissance.

10. Procédé de reconnaissance de caractère, comprenant :
la reconnaissance d'un caractère dans une image ;
l'échantillonnage d'une pluralité d'images satisfaisant à une condition définie ; la saisie d'un caractère lu à partir de l'image échantillonnée par un opérateur ;
la comparaison du caractère reconnu avec le caractère saisi ;
l'évaluation si une erreur de lecture s'est produite ou non pour la reconnaissance du caractère, sur la base d'un résultat de comparaison ; et
l'archivage de l'image échantillonnée si l'erreur de lecture s'est produite,
où une image est sélectionnée parmi la pluralité d'images sur la base d'une fiabilité de lecture incorrecte du caractère,
où la fiabilité est évaluée sur la base de la compréhension ou de la non-compréhension d'un caractère spécifié par le caractère reconnu,
où le caractère spécifié est classé dans un rang sur la base de la probabilité d'erreur de lecture des caractères spécifiés dans une pluralité de rangs, et
où l'échantillonnage évalue que l'erreur de lecture s'est probablement produite sur la base du rang du caractère spécifié.

11. Produit de programme de commande utilisé pour un système de reconnaissance de caractère, comportant un ou plusieurs supports lisibles par ordinateur avec des instructions exécutables par ordinateur, pour l'exécution des étapes de procédé suivantes :
reconnaissance de caractère dans une image ;
échantillonnage d'une pluralité d'images satisfaisant à une condition définie ;
saisie d'un caractère lu à partir de l'image échantillonnée par un opérateur ;
comparaison du caractère reconnu avec le caractère saisi ;
évaluation si une erreur de lecture s'est produite ou non pour la reconnaissance du caractère, sur la base d'un résultat de comparaison ; et
archivage de l'image échantillonnée si l'erreur de lecture s'est produite,
où une image est sélectionnée parmi la pluralité d'images sur la base d'une fiabilité de lecture incorrecte du caractère,
où la fiabilité est évaluée sur la base de la compréhension ou de la non-compréhension d'un caractère spécifié par le caractère reconnu,
où le caractère spécifié est classé dans un rang sur la base de la probabilité d'erreur de lecture des caractères spécifiés dans une pluralité de rangs, et
où l'échantillonnage évalue que l'erreur de lecture s'est probablement produite sur la base du rang du caractère spécifié.
